# EUROPEAN PATENT APPLICATION

(11) **EP 4 415 076 A1**
(43) Date of publication of application: **14.08.2024**
(21) Application number: 22911917.7
(22) Date of filing: 21.12.2022
(51) Int. Cl.: H01M 4/587, H01M 4/36, H01M 4/62, H01M 4/133, H01M 10/0525, H01M 4/02

(54) **NEGATIVE ELECTRODE ACTIVE MATERIAL, AND NEGATIVE ELECTRODE AND SECONDARY BATTERY COMPRISING SAME**

(30) Priority: 21.12.2021 KR 20210184259
(71) Applicant: LG Energy Solution, Ltd., Seoul 07335 (KR)
(72) Inventor: LIM, Ga Hyun, Daejeon 34122 (KR); LEE, Chang Ju, Daejeon 34122 (KR); WOO, Sang Wook, Daejeon 34122 (KR)
(74) Representative: Hoffmann Eitle
(86) International application number: PCT/KR2022/020945
(87) International publication number: WO 2023/121284

(57) **Abstract**

The present invention relates to a negative electrode active material including artificial graphite particles, wherein, during torque rheometer measurement of a sample consisting of the negative electrode active material and water, wherein a solid content value when the sample has a maximum torque value, which is measured by a specific method, is 69.5 wt% or more. If the solid content value, when the sample has the maximum torque value during the torque rheometer measurement, satisfies the above range, powder flowability of the negative electrode active material may be evaluated as excellent, and, in a case in which the negative electrode active material is included in a negative electrode slurry, dispersibility and phase stability may be improved. Thus, the negative electrode slurry including the negative electrode active material of the present invention and a negative electrode and a secondary battery, which are prepared therefrom, may have improved productivity and quality.

## Description

### TECHNICAL FIELD

### Cross-reference to Related Applications

This application claims priority from Korean Patent Application No. 10-2021-0184259, filed on December 21, 2021, the disclosure of which is incorporated by reference herein.

### Technical Field

The present invention relates to a negative electrode active material, and a negative electrode and a secondary battery which include the same.

### BACKGROUND ART

In line with growing concerns about environmental issues, a significant amount of research into electric vehicles (EVs) and hybrid electric vehicles (HEVs), which may replace vehicles using fossil fuels, such as gasoline vehicle and diesel vehicle, one of major causes of air pollution, has been conducted. Lithium secondary batteries having high energy density, high discharge voltage, and high output stability have been mainly researched and used as power sources of these electric vehicles (EVs) and hybrid electric vehicles (HEVs).

In general, a lithium secondary battery is composed by including a positive electrode, a negative electrode, a separator, and an electrolyte, and the positive electrode or negative electrode is prepared by preparing a slurry by mixing a positive electrode active material or negative electrode active material with a binder and dispersing the mixture in a solvent, and forming an electrode active material layer by coating the slurry on a surface of an electrode current collector and drying.

A carbon-based active material, which may reversibly intercalate and deintercalate lithium ions and maintains structural and electrical properties, may be used as the negative electrode active material. Various types of carbon-based materials, such as artificial graphite, natural graphite, and hard carbon, have been used as the carbon-based active material, and, among them, a graphite-based active material, which may guarantee life characteristics of the lithium secondary battery due to excellent reversibility, has been most widely used. Since the graphite-based active material has a low discharge voltage relative to lithium of -0.2 V, a battery using the graphite-based active material may exhibit a high discharge voltage of 3.6 V, and thus, it provides many advantages in terms of energy density of the lithium battery.

Among the graphite-based active materials, since artificial graphite has good lithium ion intercalation/ deintercalation characteristics due to a relatively lower degree of orientation during electrode rolling than natural graphite, the artificial graphite is advantageous in that rapid charging performance of the battery is excellent and life characteristics are excellent due to a low degree of expansion according to charge and discharge.

However, since the artificial graphite exhibits hydrophobicity, there is a problem in that, when water is used as a solvent for a negative electrode slurry, dispersion is not easy and phase stability of the slurry is reduced. Particularly, since attempts have been made to increase a solid content of the negative electrode slurry for reasons such as an increase in loading amount of the negative electrode, an improvement in efficiency during a drying process, and an improvement in binder migration, the above-described problem of reduction in dispersibility and stability of the slurry phase of the artificial graphite is becoming more prominent in terms of the increase in solid content. Also, since the dispersibility problem causes a filter clogging problem during transport of the negative electrode slurry during a negative electrode preparation process, there is a problem in that overall preparation process efficiency and quality of the secondary battery are reduced.

Japanese Patent No. 4403327 discloses graphite powder for a negative electrode of a lithium ion secondary battery, but does not provide an alternative to the above-described problems.

### [PRIOR ART DOCUMENT]

### [PATENT DOCUMENT]

Japanese Patent No. 4403327

### DISCLOSURE OF THE INVENTION

### TECHNICAL PROBLEM

An aspect of the present invention provides a negative electrode active material which may have excellent dispersibility even if a solid content of a negative electrode slurry is increased and may improve phase stability of the negative electrode slurry.

Another aspect of the present invention provides a negative electrode slurry including the above-described negative electrode active material.

Another aspect of the present invention provides a negative electrode including the above-described negative electrode active material.

Another aspect of the present invention provides a secondary battery including the above-described negative electrode.

### TECHNICAL SOLUTION

According to an aspect of the present invention, there is provided a negative electrode active material including artificial graphite particles, wherein, during torque rheometer measurement of a sample consisting of the negative electrode active material and water, wherein a solid content value when the sample has a maximum torque value is 69.5 wt% or more, and the solid content value when the sample has the maximum torque value is measured by a method including the following steps (a) to (c).
(a) adding the negative electrode active material into a sample container of a torque rheometer;
(b) measuring a torque value according to a solid content value of the sample by operating the torque rheometer while injecting water into the sample container of the torque rheometer at a constant rate; and
(c) deriving a solid content value when the sample has a maximum torque value in the step (b).

According to another aspect of the present invention, there is provided a negative electrode slurry including the above-described negative electrode active material; a negative electrode binder; a negative electrode conductive agent; and a solvent.

According to another aspect of the present invention, there is provided a negative electrode including a negative electrode current collector; and a negative electrode active material layer disposed on at least one surface of the negative electrode current collector, wherein the negative electrode active material layer includes the above-described negative electrode active material.

According to another aspect of the present invention, there is provided a secondary battery including the above-described negative electrode; a positive electrode facing the negative electrode; a separator disposed between the negative electrode and the positive electrode; and an electrolyte.

### ADVANTAGEOUS EFFECTS

The present invention relates to a negative electrode active material including artificial graphite particles, wherein, during torque rheometer measurement of a sample formed of the negative electrode active material and water, a solid content value when the sample has a maximum torque value, which is measured by a specific method, is 69.5 wt% or more. If the solid content value, when the sample has the maximum torque value during the torque rheometer measurement, satisfies the above range, powder flowability of the negative electrode active material may be evaluated as excellent, and, in a case in which the negative electrode active material is included in a negative electrode slurry, dispersibility and phase stability may be improved. Thus, the negative electrode slurry including the negative electrode active material of the present invention and a negative electrode and a secondary battery, which are prepared therefrom, may have improved productivity and quality.

### BRIEF DESCRIPTION OF THE DRAWINGS

FIG. 1 illustrates a graph of a torque value and a solid content value of a sample formed of a negative electrode active material according to Example 1 and water.
FIG. 2 illustrates a graph of a torque value and a solid content value of a sample formed of a negative electrode active material according to Example 2 and water.
FIG. 3 illustrates a graph of a torque value and a solid content value of a sample formed of a negative electrode active material according to Comparative Example 1 and water.
FIG. 4 illustrates a graph of a torque value and a solid content value of a sample formed of a negative electrode active material according to Comparative Example 2 and water.
FIG. 5 is a graph illustrating changes in shear viscosities according to shear rate of Example A, Example B, Example C, Comparative Example A, Comparative Example B, and Comparative Example C.

### MODE FOR CARRYING OUT THE INVENTION

It will be understood that words or terms used in the specification and claims shall not be interpreted as the meaning defined in commonly used dictionaries, and it will be further understood that the words or terms should be interpreted as having a meaning that is consistent with their meaning in the context of the relevant art and the technical idea of the invention, based on the principle that an inventor may properly define the meaning of the words or terms to best explain the invention.

The terminology used herein is for the purpose of describing particular example embodiments only and is not intended to be limiting of the present invention. In the specification, the terms of a singular form may include plural forms unless referred to the contrary.

It will be further understood that the terms "include," "comprise," or "have" when used in this specification, specify the presence of stated features, numbers, steps, elements, or combinations thereof, but do not preclude the presence or addition of one or more other features, numbers, steps, elements, or combinations thereof.

An average particle diameter (D₅₀) in the present specification may be defined as a particle diameter at a cumulative volume of 50% in a particle size distribution curve of particles. The average particle diameter (D₅₀), for example, may be measured by using a laser diffraction method. The laser diffraction method may generally measure a particle diameter ranging from a submicron level to a few mm and may obtain highly repeatable and high-resolution results.

The expression 'primary particle' in the present specification means a single particle, that is, one particle, and the expression 'secondary particle' means an aggregate in which a plurality of primary particles is aggregated by an intentional assembly or bonding process.

Hereinafter, the present invention will be described in detail.

### Negative Electrode Active Material

The present invention relates to a negative electrode active material, specifically, a negative electrode active material for a lithium secondary battery.

Specifically, the negative electrode active material is characterized in that it is a negative electrode active material including artificial graphite particles, wherein, during torque rheometer measurement of a sample consisting of the negative electrode active material and water, wherein a solid content value when the sample has a maximum torque value is 69.5 wt% or more, and the solid content value when the sample has the maximum torque value is measured by a method including the following steps (a) to (c).
(a) adding the negative electrode active material into a sample container of a torque rheometer;
(b) measuring a torque value according to a solid content value of the sample by operating the torque rheometer while injecting water into the sample container of the torque rheometer at a constant rate; and
(c) deriving a solid content value when the sample has a maximum torque value in the step (b)

Conventionally, since artificial graphite exhibits hydrophobicity, there was a problem in that, when water was used as a solvent for a negative electrode slurry , dispersibility was not good and phase stability of the slurry was reduced. Also, since the dispersibility problem causes a filter clogging problem during transport of the negative electrode slurry during a negative electrode preparation process, there is a problem in that overall preparation process efficiency and quality of a secondary battery are reduced.

In order to solve these problems, the present invention relates to a negative electrode active material including artificial graphite particles, wherein, during torque rheometer measurement of a sample formed of the negative electrode active material and water, a solid content value when the sample has a maximum torque value, which is measured by a specific method, is 69.5 wt% or more. If the solid content value, when the sample has the maximum torque value during the torque rheometer measurement, satisfies the above range, powder flowability of the negative electrode active material may be evaluated as excellent, and, in a case in which the negative electrode active material is included in a negative electrode slurry, dispersibility and phase stability may be improved. Thus, the negative electrode slurry including the negative electrode active material of the present invention and a negative electrode and a secondary battery, which are prepared therefrom, may have improved productivity and quality.

The negative electrode active material includes artificial graphite particles. Artificial graphite is prepared by heat-treating amorphous carbon at a high temperature (e.g., 2,500°C to 3,200°C), wherein the artificial graphite is distinguished from natural graphite in that it is artificially synthesized graphite.

The artificial graphite particles may be in the form of a primary particle, or may have a secondary particle structure in which two or more primary particles are assembled. More specifically, the artificial graphite particles may have a secondary particle structure in which two or more primary particles are assembled, and, in this case, it is desirable in terms of slurry dispersibility and phase stability.

In a case in which the artificial graphite particles are in the form of a secondary particle, voids may be formed in the artificial graphite particles, wherein the voids may be empty spaces formed between the primary particles and may be amorphous, and two or more thereof may be present.

In the present invention, a method of preparing the artificial graphite particles is not particularly limited as long as it satisfies the "solid content value when the sample has the maximum torque value" to be described later.

Specifically, in the case that the artificial graphite particles are in the form of a secondary particle, the artificial graphite particles may be prepared by mixing a carbon precursor and a binder material (for example, pitch), performing spheronization and assembly processes to prepare an intermediate in the form of a secondary particle, and graphitizing the intermediate by performing a heat treatment at a temperature of 2,500°C or higher, specifically, 3,000°C or higher. In this case, the carbon precursor may be at least one selected from the group consisting of coal-based heavy oil, petroleum-based heavy oil, tar, pitch, or coke, and may specifically be at least one selected from the group consisting of coke and pitch. In this case, a spheronization process may be additionally performed on the carbon precursor, and, in this case, surfaces of primary artificial graphite particles may be further smoothed, and, accordingly, wettability of secondary-particulated artificial graphite particles may be improved, flowability of the negative electrode active material powder may be improved, and the solid content value when the sample formed of the negative electrode active material and water has the maximum torque value to be described later may be improved to a desired level. The spheronization process performed on the carbon precursor, for example, may be performed using a jet mill, specifically, a counter jet mill, wherein a rotational speed of the jet mill may be 8 Hz or more, particularly 10 Hz or more, and more particularly 15 Hz or more, and may be 50 Hz or less, particularly 40 Hz or less, and more particularly 30 Hz or less. Also, the spheronization process performed on the carbon precursor may be performed for 3 minutes to 60 minutes, specifically, 5 minutes to 15 minutes.

Furthermore, in the case that the artificial graphite particles are in the form of a secondary particle, the artificial graphite particles may be prepared by a method of mixing artificial graphite particles in the form of a primary particle with a binder material (for example, pitch), spheronizing, aggregating, and heat-treating to aggregate the artificial graphite particles in the form of a primary particle into a secondary particle. In this case, the artificial graphite particles in the form of a primary particle may be prepared by graphitizing a carbon precursor by performing a heat treatment at a temperature of 2,500°C or higher, specifically, 3,000°C or higher. The carbon precursor may be at least one selected from the group consisting of coal-based heavy oil, petroleum-based heavy oil, tar, pitch, or coke, and may specifically be at least one selected from the group consisting of coke and pitch. In this case, a spheronization process may be additionally performed on the artificial graphite particles in the form of a primary particle; or the carbon precursor used during the preparation of the artificial graphite particles in the form of a primary particle, and, in this case, surfaces of the primary artificial graphite particles may be further smoothed, and, accordingly, wettability of the secondary-particulated artificial graphite particles may be improved, flowability of the negative electrode active material powder may be improved, and the solid content value when the sample formed of the negative electrode active material and water has the maximum torque value to be described later may be improved to a desired level. The spheronization process performed on the artificial graphite particles in the form of a primary particle; or the carbon precursor used during the preparation of the artificial graphite particles in the form of a primary particle, for example, may be performed using a jet mill, specifically, a counter jet mill, wherein a rotational speed of the jet mill may be 8 Hz or more, particularly 10 Hz or more, and more particularly 15 Hz or more, and may be 50 Hz or less, particularly 40 Hz or less, and more particularly 30 Hz or less. Also, the spheronization process performed on the artificial graphite particles in the form of a primary particle; or the carbon precursor used during the preparation of the artificial graphite particles in the form of a primary particle may be performed for 3 minutes to 60 minutes, specifically, 5 minutes to 15 minutes.

In the present invention, during the torque rheometer measurement of the sample consisting of the negative electrode active material and water, a solid content value when the sample has the maximum torque value is 69.5 wt% or more.

The solid content value when the sample has the maximum torque value may be measured by a method including the following steps (a) to (c).
(a) adding the negative electrode active material into a sample container of a torque rheometer;
(b) measuring a torque value according to a solid content value of the sample by operating the torque rheometer while injecting water into the sample container of the torque rheometer at a constant rate; and
(c) deriving a solid content value when the sample has a maximum torque value in the step (b)

The torque rheometer is a device for measuring rheological properties according to flow generated by rotating a fluid or the like, wherein the torque rheometer, for example, may measure a viscosity-related torque generated by resistance of the fluid which is formed from shear action, and the resulting various rheological properties. Examples of the torque rheometer may be measuring mixers by Brabender GmbH & Co. KG.

Specifically, in the present invention, the negative electrode active material is added into the sample container of the torque rheometer, and the sample in the sample container is stirred using two blades while injecting water into the sample container at a constant rate to be able to measure a torque value according to the solid content value of the sample formed of the negative electrode active material and water. A graph illustrating the torque value according to the solid content value of the sample may be obtained by an analysis device of the torque rheometer.

Phase stability and dispersibility of the negative electrode slurry including the negative electrode active material may be predicted by measuring the solid content value when the sample has the maximum torque value through the torque rheometer of the negative electrode active material. In a case in which the solid content value when the sample formed of the negative electrode active material and water has the maximum torque value is 69.5 wt% or more, the negative electrode active material may be evaluated to have excellent wettability against water and excellent flowability of the negative electrode active material powder. When the negative electrode active material having the above-described characteristics is added to the negative electrode slurry, it is advantageous in that it has excellent dispersibility, may improve the phase stability of the slurry, and may improve productivity and quality of the negative electrode preparation process. If, in a case in which the solid content value when the sample formed of the negative electrode active material and water has the maximum torque value is less than 69.5 wt%, since the flowability of the powder is poor to reduce the dispersibility and phase stability of the negative electrode slurry, there is a concern that productivity and quality of the negative electrode may be reduced, for example, filter clogging in the negative electrode slurry transport process is caused.

In step (a), a volume of the negative electrode active material added into the sample container may be 55 mL.

In step (b), the rate of injecting the water may be 1 mL/min. Also, a stirring speed of the sample container or a rotational speed of the two blades in the sample container may be 50 rpm. Temperature of the sample container during the operation of the torque rheometer may be 25°C.

The solid content value when the sample formed of the negative electrode active material according to the present invention and water has the maximum torque value may be obtained by adjusting a shape or surface roughness in a preparation process of the negative electrode active material, and, for example, may be obtained by adjusting a spheronization speed or spheronization time during the preparation of the artificial graphite. For example, the solid content value when the sample has the maximum torque value according to the present invention may be achieved by increasing the spheronization speed in terms of smoothing the shape of the negative electrode active material, and, more specifically, may be achieved by performing a spheronization process on primary artificial graphite particles or a carbon precursor to become the primary artificial graphite particles and appropriately adjusting the spheronization speed and time during the preparation of the artificial graphite in the form of a secondary particle, but the present invention is not limited thereto.

Compression density measured by powder flow test of the negative electrode active material may be in a range of 850 kg/m³ to 1,200 kg/m³, specifically, 900 kg/m³ to 950 kg/m³. When the compression density measured by the powder flow test of the negative electrode active material satisfies the above range, the negative electrode active material may be evaluated to have a shape close to a sphere and, accordingly, flowability and dispersibility of the negative electrode active material may be further improved.

The measurement of the compression density of the negative electrode active material may be performed by a powder flow analyzer, and, for example, may be performed by a method in which the negative electrode active material is put into the powder flow analyzer and a process of applying normal stress and shear stress to the negative electrode active material with a lid is repeated five times to measure density of the negative electrode active material after compression. The measurement of the compression density of the negative electrode active material may be performed using a powder flow analyzer (device name PFT) by Brookfield Engineering Laboratories, Middleboro, Massachusetts, USA. The compression density may be performed in accordance with ASTM D6128.

The negative electrode active material may have a sphericity of 0.75 to 1, specifically, 0.78 to 0.95. When the sphericity is within the above range, the flowability and dispersibility of the negative electrode active material may be further improved. However, an effect of improving the flowability and dispersibility of the negative electrode active material may not be achieved by only increasing the sphericity of the negative electrode active material, and it is necessary to also satisfy the above-described "solid content value when the sample formed of the negative electrode active material and water has the maximum torque value".

The sphericity may be measured using a particle shape analyzer (e.g., Morphologi M4 by Malvern Panalytical Ltd.).

The negative electrode active material may have an average particle diameter (D₅₀) of 14 µm to 20 um, specifically, 14 um to 20 um. When the average particle diameter is within the above range, an amount of a dispersant to be added during the preparation of the negative electrode slurry may be minimized because a specific surface area is adjusted to an appropriate level, and it is desirable in terms of improving processability and the resulting battery performance because aggregation and a reduction in phase stability due to an excessive increase in the average particle diameter (D₅₀) of the negative electrode active material may be prevented.

The negative electrode active material may have a Brunauer-Emmett-Teller (BET) specific surface area of 0.1 m²/g to 2.0 m²/g, particularly 0.6 m²/g to 1.2 m²/g, and more particularly 0.6 m²/g to 0.9 m²/g, and, when the BET specific surface area is within the above range, since the amount of the dispersant to be added during the preparation of the negative electrode slurry may be minimized because the specific surface area is adjusted to an appropriate level, it is desirable in terms of improving the processability and the resulting battery performance. The BET specific surface area may be measured using a BEL Sorption instrument (BEL Japan, Inc.) .

The negative electrode active material may further include an amorphous carbon coating layer disposed on a surface of the artificial graphite particles. The amorphous carbon coating layer may contribute to improve structural stability of the artificial graphite particle and prevent a side reaction between the negative electrode active material and an electrolyte solution.

The amorphous carbon coating layer may be formed in an amount ranging from 0.1 wt% to 10 wt%, preferably, 1 wt% to 5 wt% based on a total weight of the negative electrode active material. The presence of the amorphous carbon coating layer may improve the structural stability of the negative electrode active material, but, since there is a concern that excessive formation of the amorphous carbon coating layer causes degradation of high-temperature storage performance and a reduction in initial efficiency due to an increase in the specific surface area during rolling of the negative electrode, it is desirable to form the carbon coating layer within the above-described amount range.

The amorphous carbon coating layer may be formed by performing a heat treatment, after providing a carbon coating layer precursor to the artificial graphite particles.

The carbon coating layer precursor may include at least one selected from polymer resin and pitch. Specifically, the polymer resin may include at least one selected from the group consisting of sucrose, phenol resin, naphthalene resin, polyvinyl alcohol resin, furfuryl alcohol resin, polyacrylonitrile resin, polyamide resin, furan resin, cellulose resin, styrene resin, polyimide resin, epoxy resin, vinyl chloride resin, and polyvinyl chloride. The pitch may include at least one selected from the group consisting of coal-based pitch, petroleum-based pitch, and mesophase pitch. A heat treatment process for forming the amorphous carbon coating layer may be performed at 1,000°C to 1,500°C in terms of promoting uniform formation of the amorphous carbon coating layer.

### Negative Electrode Slurry

Also, the present invention provides a negative electrode slurry. The negative electrode slurry may be a negative electrode slurry for preparing a negative electrode for a lithium secondary battery.

The negative electrode slurry includes the above-described negative electrode active material. Specifically, the negative electrode slurry may include the above-described negative electrode active material, a negative electrode binder, a negative electrode conductive agent, and a solvent.

The negative electrode slurry according to the present invention may have excellent dispersibility and improved phase stability by including the above-described negative electrode active material. Particularly, since the negative electrode slurry according to the present invention exhibits excellent dispersibility and phase stability even if a solid content of the negative electrode slurry is increased, productivity and quality of a high-capacity negative electrode and a secondary battery may be improved.

The negative electrode active material may be included in the negative electrode slurry in an amount ranging from 80 wt% to 99 wt%, preferably, 88 wt% to 98 wt% based on a weight of the solid content of the negative electrode slurry.

In addition, the description of the negative electrode active material has been described above.

The negative electrode binder is a component that assists in the binding between the negative electrode active material and/or a current collector, wherein the negative electrode binder may be included in the negative electrode slurry in an amount ranging from 1 wt% to 30 wt%, preferably, 1 wt% to 10 wt% based on the weight of the solid content of the negative electrode slurry.

The negative electrode binder may include at least one selected from the group consisting of polyvinylidene fluoride (PVDF), polyvinyl alcohol, carboxymethyl cellulose (CMC), starch, hydroxypropyl cellulose, regenerated cellulose, polyvinylpyrrolidone, polytetrafluoroethylene, polyethylene, polypropylene, an ethylene-propylene-diene polymer (EPDM), a sulfonated EPDM, a styrene-butadiene rubber, and a fluorine rubber, preferably, at least one selected from polyvinylidene fluoride and a styrene-butadiene rubber.

The negative electrode conductive agent is a component for further improving the conductivity of the negative electrode active material, wherein the negative electrode conductive agent may be included in the negative electrode slurry in an amount ranging from 1 wt% to 30 wt%, preferably, 1 wt% to 10 wt% based on the weight of the solid content of the negative electrode slurry.

Any negative electrode conductive agent may be used without particular limitation so long as it has conductivity without causing adverse chemical changes in the battery, and, for example, a conductive material, such as: graphite such as natural graphite or artificial graphite; carbon black such as acetylene black, Ketjen black, channel black, furnace black, lamp black, and thermal black; conductive fibers such as carbon fibers or metal fibers; fluorocarbon; metal powder such as aluminum powder, and nickel powder; conductive whiskers such as zinc oxide whiskers and potassium titanate whiskers; conductive metal oxide such as titanium oxide; or polyphenylene derivatives, may be used. Specific examples of a commercial conductive agent may be acetylene black-based products (Chevron Chemical Company, Denka black (Denka Singapore Private Limited), or Gulf Oil Company), Ketjen black, EC-based products (Armak Company), Vulcan XC-72 (Cabot Company), and Super P (Timcal Graphite & Carbon).

The solvent may include water or an organic solvent, such as N-methyl-2-pyrrolidone (NMP), and may more specifically be water. With respect to the negative electrode slurry according to the present invention, problems, such as the reduction in dispersibility and the reduction in phase stability, due to the use of the negative electrode active material including artificial graphite particles may be significantly prevented.

The negative electrode slurry may further include a thickener in terms of improving the dispersibility.

Any thickener used in a conventional lithium secondary battery may be used as the thickener, and an example thereof is carboxymethyl cellulose (CMC).

The solid content of the negative electrode slurry may be in a range of 46 wt% or more, specifically, 47 wt% to 56 wt% based on a total weight of the negative electrode slurry.

According to the present invention, since the dispersibility and phase stability of the negative electrode slurry are improved due to the use of the above-described negative electrode active material, excellent dispersibility and phase stability may be secured even if the negative electrode slurry is prepared with a solid content within the above range.

When the solid content of the negative electrode slurry is in a range of 46 wt% or more, specifically, 47 wt% to 56 wt%, viscosity at 23°C may be in a range of 4,500 cP to 10,000 cP, specifically, 4,800 cP to 7,800 cP.

When the solid content of the negative electrode slurry is in a range of 46 wt% or more, specifically, 47 wt% to 56 wt%, a shear thickening slope obtained during measurement of shear viscosity according to shear rate may be a negative (-) value.

In a case in which the shear thickening slope of the negative electrode slurry is a negative (-) slope, filter-passing is easy, and, specifically, since it is possible to pass through a 125 mesh filter, filter clogging may not occur when the negative electrode slurry is passed through the filter. The less the shear thickening is, the easier the filter-passing of the negative electrode slurry is. A negative electrode active material slurry showing significant thickening when strong shear is applied from the filter is highly likely to clog the filter, and this tendency may be quantitatively evaluated by a value of the shear thickening slope.

When the shear viscosity of the negative electrode active material slurry according to the shear rate is measured using a rheometer and a viscosity value of a section showing shear thickening in the measured shear viscosity is transformed into a log value, the shear thickening slope may be determined by drawing a straight line graph by linear fitting from a point where the shear thickening starts to a point where it ends.

### Negative Electrode

Also, the present invention provides a negative electrode, specifically, a negative electrode for a lithium secondary battery. The negative electrode may be a negative electrode including the above-described negative electrode active material.

Specifically, the negative electrode includes a negative electrode current collector; and a negative electrode active material layer disposed on at least one surface of the negative electrode current collector, and the negative electrode active material layer includes the above-described negative electrode active material.

A negative electrode current collector generally used in the art may be used without limitation as the negative electrode current collector, and, for example, the negative electrode current collector is not particularly limited so long as it has high conductivity without causing adverse chemical changes in the lithium secondary battery. For example, the negative electrode current collector may include at least one selected from copper, stainless steel, aluminum, nickel, titanium, fired carbon, and an aluminum-cadmium alloy, preferably, copper.

The negative electrode current collector may have fine surface roughness to improve bonding strength with the negative electrode active material, and the negative electrode current collector may be used in various shapes such as a film, a sheet, a foil, a net, a porous body, a foam body, a non-woven fabric body, and the like.

The negative electrode current collector generally may have a thickness of 3 um to 500 µm.

The negative electrode active material layer is disposed on at least one surface of the negative electrode current collector. Specifically, the negative electrode active material layer may be disposed on one surface or both surfaces of the negative electrode current collector.

The negative electrode active material layer includes the above-described negative electrode active material.

The negative electrode active material may be included in an amount ranging from 80 wt% to 99 wt%, preferably, 88 wt% to 98 wt% in the negative electrode active material layer.

In addition, the description of the negative electrode active material is as described above.

The negative electrode active material layer may further include a negative electrode binder, a negative electrode conductive agent, and/or a thickener in addition to the above-described negative electrode active material.

The negative electrode binder is a component that assists in the binding between the active material and/or the current collector, wherein the negative electrode binder may commonly be included in an amount ranging from 1 wt% to 30 wt%, preferably, 1 wt% to 10 wt% in the negative electrode active material layer.

In addition, the description of the negative electrode binder has been described above.

Any thickener used in a conventional lithium secondary battery may be used as the thickener, and an example thereof is carboxymethyl cellulose (CMC).

The negative electrode conductive agent is a component for further improving the conductivity of the negative electrode active material, wherein the negative electrode conductive agent may be included in an amount ranging from 1 wt% to 30 wt%, preferably, 1 wt% to 10 wt% in the negative electrode active material layer.

In addition, the description of the negative electrode conductive agent has been described above.

A thickness of the negative electrode active material layer may be in a range of 10 um to 150 um, specifically, 50 um to 100 µm, but is not limited thereto.

The negative electrode active material layer may be prepared by coating the negative electrode current collector with the negative electrode slurry and rolling and drying the coated negative electrode current collector.

### Secondary Battery

Furthermore, the present invention provides a secondary battery including the above-described negative electrode, more particularly, a lithium secondary battery.

The secondary battery may include the above-described negative electrode; a positive electrode facing the negative electrode, a separator disposed between the negative electrode and the positive electrode, and an electrolyte.

The positive electrode may face the negative electrode.

The positive electrode may include a positive electrode current collector; and a positive electrode active material layer disposed on the positive electrode current collector.

A positive current collector generally used in the art may be used without limitation as the positive electrode current collector, and, for example, the positive electrode current collector is not particularly limited so long as it has high conductivity without causing adverse chemical changes in the secondary battery. For example, the positive electrode current collector may include at least one selected from copper, stainless steel, aluminum, nickel, titanium, fired carbon, and an aluminum-cadmium alloy, preferably, aluminum.

The positive electrode current collector may have fine surface roughness to improve bonding strength with the positive electrode active material, and the positive electrode current collector may be used in various shapes such as a film, a sheet, a foil, a net, a porous body, a foam body, a non-woven fabric body, and the like.

The positive electrode current collector generally may have a thickness of 3 um to 500 µm.

The positive electrode active material layer may include a positive electrode active material.

The positive electrode active material is a compound capable of reversibly intercalating and deintercalating lithium, wherein the positive electrode active material may specifically include a lithium composite metal oxide including lithium and at least one metal such as cobalt, manganese, nickel, or aluminum. More specifically, the lithium composite metal oxide may include lithium-manganese-based oxide (e.g., LiMnO₂, LiMn₂O₄, etc.), lithium-cobalt-based oxide (e.g., LiCoO₂, etc.), lithium-nickel-based oxide (e.g., LiNiO₂, etc.), lithium-nickel-manganese-based oxide (e.g., LiNi_{1-Y}Mn_{Y}O₂ (where 0<Y<1), LiMn_{2-Z}Ni_{z}O₄ (where 0<Z<2), etc.), lithium-nickel-cobalt-based oxide (e.g., LiNi_{1-Y1}Co_{Y1}O₂ (where 0<Y1<1), etc.), lithium-manganese-cobalt-based oxide (e.g., LiCo_{1-Y2}Mn_{Y2}O₂ (where 0<Y2<1), LiMn_{2-Z1}Co_{z1}O₄ (where 0<Z1<2), etc.), lithium-nickel-manganese-cobalt-based oxide (e.g., Li(NiₚCo_{q}Mnᵣ₁)O₂ (where 0<p<1, 0<q<1, 0<r1<1, and p+q+r1=1) or Li(Niₚ₁Co_{q1}Mnᵣ₂)O₄ (where 0<p1<2, 0<q1<2, 0<r2<2, and p1+q1+r2=2), etc.), or lithium-nickel-cobalt-transition metal (M) oxide (e.g., Li(Niₚ₂Co_{q2}Mnᵣ₃M_{S2})O₂ (where M is selected from the group consisting of aluminum (Al), iron (Fe), vanadium (V), chromium (Cr), titanium (Ti), tantalum (Ta), magnesium (Mg), and molybdenum (Mo), and p2, q2, r3, and s2 are atomic fractions of each independent elements, wherein 0<p2<1, 0<q2<1, 0<r3<1, 0<S2<1, and p2+q2+r3+S2=1), etc.), and any one thereof or a m ixture of two or more thereof may be included. Among these materials, in terms of the improvement of capacity characteristics and stability of the battery, the lithium composite metal oxide may include LiCoO₂, LiMnO₂, LiNiO₂, lithium nickel manganese cobalt oxide (e.g., Li(Ni_{0.6}Mn_{0.2}Co_{0.2})O₂, Li(Ni_{0.5}Mn_{0.3}Co_{0.2})O₂, or Li(Ni_{0.8}Mn_{0.1}Co_{0.1})O₂), or lithium nickel cobalt aluminum oxide (e.g., LiNi_{0.8}Co_{0.15}Al_{0.05}O₂, etc.), and, in consideration of a significant improvement due to the control of type and content ratio of elements constituting the lithium composite metal oxide, the lithium composite metal oxide may include Li(Ni_{0.6}Mn_{0.2}Co_{0.2})O₂, Li(Ni_{0.5}Mn_{0.3}Co_{0.2})O₂, Li(Ni_{0.7}Mn_{0.15}Co_{0.15})O₂, or Li(Ni_{0.8}Mn_{0.1}Co_{0.1})O₂, and any one thereof or a mixture of two or more thereof may be used.

The positive electrode active material may be included in an amount ranging from 80 wt% to 99 wt% in the positive electrode active material layer.

The positive electrode active material layer may further include at least one selected from a binder and a conductive agent together with the positive electrode active material.

The binder is a component that assists in the binding between the active material and the conductive agent and in the binding with the current collector, wherein the binder is commonly added in an amount ranging from 1 wt% to 30 wt% based on a total weight of a positive electrode material mixture. Examples of the binder may be at least one selected from the group consisting of polyvinylidene fluoride, polyvinyl alcohol, carboxymethyl cellulose (CMC), starch, hydroxypropyl cellulose, regenerated cellulose, polyvinylpyrrolidone, polytetrafluoroethylene, polyethylene, polypropylene, an ethylene-propylene-diene terpolymer (EPDM), a sulfonated EPDM, a styrene-butadiene rubber, and a fluorine rubber.

The binder may be included in an amount ranging from 1 wt% to 30 wt% in the positive electrode active material layer.

As the conductive agent, any conductive agent may be used without particular limitation so long as it has conductivity without causing adverse chemical changes in the battery, and, for example, a conductive material, such as: graphite; a carbon-based material such as carbon black, acetylene black, Ketjen black, channel black, furnace black, lamp black, and thermal black; conductive fibers such as carbon fibers or metal fibers; fluorocarbon; metal powder such as aluminum powder, and nickel powder; conductive whiskers such as zinc oxide whiskers and potassium titanate whiskers; conductive metal oxide such as titanium oxide; or polyphenylene derivatives, may be used. Specific examples of a commercial conductive agent may be acetylene black-based products (Chevron Chemical Company, Denka black (Denka Singapore Private Limited), or Gulf Oil Company), Ketjen black, EC-based products (Armak Company), Vulcan XC-72 (Cabot Company), and Super P (Timcal Graphite & Carbon).

The conductive agent may be added in an amount of 1 wt% to 30 wt% in the positive electrode active material layer.

The separator separates the negative electrode and the positive electrode and provides a movement path of lithium ions, wherein any separator may be used as the separator without particular limitation as long as it is typically used in a secondary battery, and particularly, a separator having high moisture-retention ability for an electrolyte as well as low resistance to the transfer of electrolyte ions may be used. Specifically, a porous polymer film, for example, a porous polymer film prepared from a polyolefin-based polymer, such as an ethylene homopolymer, a propylene homopolymer, an ethylene/butene copolymer, an ethylene/hexene copolymer, and an ethylene/methacrylate copolymer, or a laminated structure having two or more layers thereof may be used. Also, a typical porous nonwoven fabric, for example, a nonwoven fabric formed of high melting point glass fibers or polyethylene terephthalate fibers may be used. Furthermore, a coated separator including a ceramic component or a polymer component may be used to secure heat resistance or mechanical strength, and the separator having a single layer or multilayer structure may be selectively used.

Also, the electrolyte used in the present invention may include an organic liquid electrolyte, an inorganic liquid electrolyte, a solid polymer electrolyte, a gel-type polymer electrolyte, a solid inorganic electrolyte, or a molten-type inorganic electrolyte which may be used in the preparation of the lithium secondary battery, but the present invention is not limited thereto.

Specifically, the electrolyte may include an organic solvent and a lithium salt.

Any organic solvent may be used as the organic solvent without particular limitation so long as it may function as a medium through which ions involved in an electrochemical reaction of the battery may move. Specifically, an ester-based solvent such as methyl acetate, ethyl acetate, γ-butyrolactone, and ε-caprolactone; an ether-based solvent such as dibutyl ether or tetrahydrofuran; a ketone-based solvent such as cyclohexanone; an aromatic hydrocarbon-based solvent such as benzene and fluorobenzene; or a carbonate-based solvent such as dimethyl carbonate (DMC), diethyl carbonate (DEC), methyl ethyl carbonate (MEC), ethyl methyl carbonate (EMC), ethylene carbonate (EC), and propylene carbonate (PC); an alcohol-based solvent such as ethyl alcohol and isopropyl alcohol; nitriles such as R-CN (where R is a linear, branched, or cyclic C2-C20 hydrocarbon group and may include a double-bond aromatic ring or ether bond); amides such as dimethylformamide; dioxolanes such as 1,3-dioxolane; or sulfolanes may be used as the organic solvent. Among these solvents, the carbonate-based solvent may be used, and, for example, a mixture of a cyclic carbonate (e.g., ethylene carbonate or propylene carbonate) having high ionic conductivity and high dielectric constant, and a low-viscosity linear carbonate-based compound (e.g., ethylmethyl carbonate, dimethyl carbonate, or diethyl carbonate), said mixture being able to increase charge/discharge performance of the battery, may be used. In this case, the performance of the electrolyte solution may be excellent when the cyclic carbonate and the chain carbonate are mixed in a volume ratio of about 1:1 to about 1:9.

The lithium salt may be used without particular limitation as long as it is a compound capable of providing lithium ions used in the lithium secondary battery. Specifically, LiPF₆, LiClO₄, LiAsF₆, LiBF₄, LiSbF₆, LiAlO₄, LiAlCl₄, LiCF₃SO₃, LiC₄F₉SO₃, LiN(C₂F₅SO₃)₂, LiN(C₂F₅SO₂)₂, LiN(CF₃SO₂)₂, LiCl, LiI, or LiB(C₂O₄)₂ may be used as the lithium salt. The lithium salt may be used in a concentration range of 0.1 M to 2.0 M. In a case in which the concentration of the lithium salt is included within the above range, since the electrolyte may have appropriate conductivity and viscosity, excellent performance of the electrolyte may be obtained and lithium ions may effectively move.

As described above, since the lithium secondary battery according to the present invention stably exhibits excellent discharge capacity, output characteristics, and life characteristics, the lithium secondary battery is suitable for portable devices, such as mobile phones, notebook computers, and digital cameras, and electric cars such as hybrid electric vehicles (HEVs) and particularly, may be preferably used as a constituent battery of a medium and large sized battery module. Thus, the present invention also provides a medium and large sized battery module including the above-described secondary battery as a unit cell.

The medium and large sized battery module may be preferably used in power sources that require high output and large capacity, such as an electric vehicle, a hybrid electric vehicle, and a power storage system.

Hereinafter, examples of the present invention will be described in detail in such a manner that it may easily be carried out by a person with ordinary skill in the art to which the present invention pertains. The invention may, however, be embodied in many different forms and should not be construed as being limited to the examples set forth herein.

### Examples and Comparative Examples

### (1) Preparation of Negative Electrode Active Material

Negative electrode active materials of Example 1, Example 2, Comparative Example 1, and Comparative Example 2 as shown in Table 1 below were prepared.

### Example 1: Preparation of Negative Electrode Active Material

After grinding, air flow classifying, and spheronizing a coke raw material to prepare a carbon precursor in the form of a primary particle, the carbon precursor and pitch were mixed and spheronized to prepare an intermediate in the form of a secondary particle, the intermediate was graphitized by performing a heat treatment at 3,000°C, and, accordingly, artificial graphite particles in the form of a secondary particle, in which two or more primary artificial graphite particles were aggregated, were prepared. In this case, the spheronization during the preparation of the carbon precursor was performed with a counter jet mill (rotational speed: 10 Hz) for 10 minutes.

After mixing the artificial graphite particles and pitch, a heat treatment was performed at 1,200°C to form an amorphous carbon coating layer on surfaces of the artificial graphite particles to prepare a negative electrode active material. The amorphous carbon coating layer was included in an amount of 3 wt% in the negative electrode active material.

The negative electrode active material had a sphericity of 0.79, an average particle diameter (D₅₀) of 18 um, and a BET specific surface area of 0.7 m²/g.

### Example 2: Preparation of Negative Electrode Active Material

A negative electrode active material was prepared in the same manner as in Example 1 except that the rotational speed of the counter jet mill in the spheronization process during the preparation of the carbon precursor was adjusted to 25 Hz.

The negative electrode active material had a sphericity of 0.81, an average particle diameter (D₅₀) of 18 um, and a BET specific surface area of 0.8 m²/g.

### Comparative Example 1: Preparation of Negative Electrode Active Material

A negative electrode active material of Comparative

Example 1 was prepared in the same manner as in Example 1 except that the spheronization process was not performed during the preparation of the carbon precursor.

The negative electrode active material had a sphericity of 0.74, an average particle diameter (D₅₀) of 18 um, and a BET specific surface area of 0.8 m²/g.

### Comparative Example 2: Preparation of Negative Electrode Active Material

A negative electrode active material was prepared in the same manner as in Example 1 except that the rotational speed of the counter jet mill in the spheronization process during the preparation of the carbon precursor was adjusted to 5 Hz and the spheronization time was 20 minutes.

The negative electrode active material had a sphericity of 0.81, an average particle diameter (D₅₀) of 18 um, and a BET specific surface area of 0.8 m²/g.

**[Table 1]**

| | Solid content value at the maximum torque value | Sphericity | Average particle diameter (D₅₀) (unit: µm) | BET specific surface area (unit: m²/g) |
|---|---|---|---|---|
| Example 1 | 70.05 | 0.79 | 18 | 0.7 |
| Example 2 | 71.06 | 0.81 | 18 | 0.8 |
| Comparative Example 1 | 64.85 | 0.74 | 18 | 0.8 |
| Comparative Example 2 | 68.48 | 0.81 | 18 | 0.7 |

### 1) Solid content value when the sample has the maximum torque value

As a torque rheometer, measuring mixers by Brabender GmbH & Co. KG. were used.

A "solid content value at the maximum torque value" was measured by the following method.

Step (a): First, 55 mL of the negative electrode active material of Example 1 was put into a sample container of the torque rheometer.

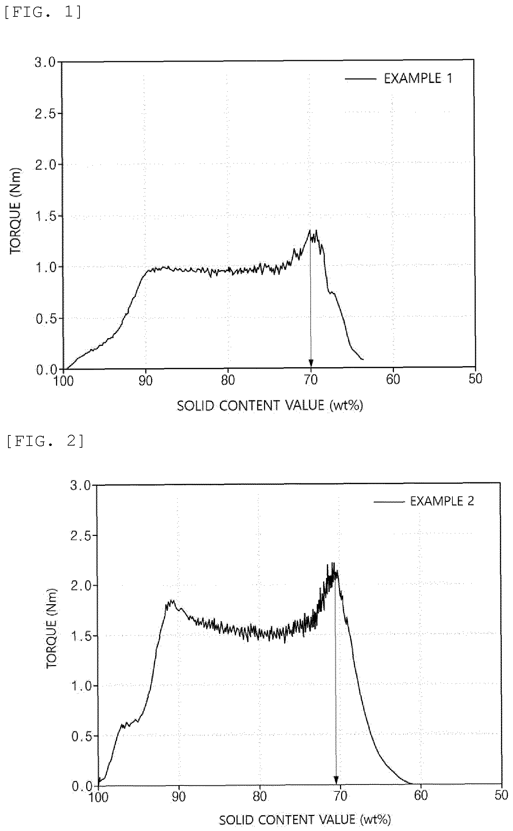

Step (b): While injecting water into the sample container at a rate of 1 mL/min, the torque rheometer was operated to rotate two blades in the sample container at 50 rpm to stir a sample. In this process, an analysis software of the torque rheometer was operated to measure a torque value according to the solid content value, and, accordingly, a graph of the X-axis solid content value (unit: wt%) and the Y-axis torque value (unit: N·m) was illustrated as in FIG. 1.

Step (c): The "solid content value at the maximum torque value" of the sample formed of the negative electrode active material and water was obtained by analyzing the graph obtained above.

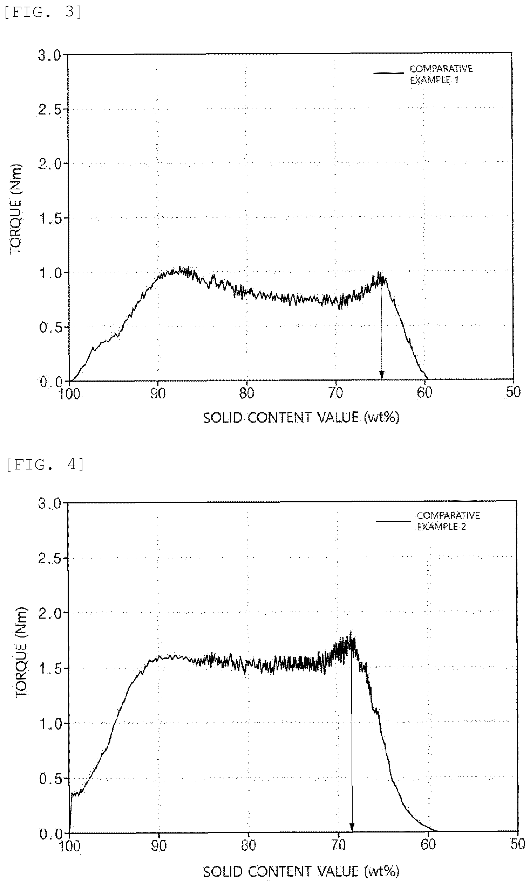

A "solid content value when the sample has the maximum torque value" was obtained for Example 2, Comparative Example 1, and Comparative Example 2 in the same manner as above. Graphs of solid content values and torque values of samples formed of the negative electrode active materials of Example 2, Comparative Example 1, and Comparative Example 2 and water are illustrated in FIGS. 2, 3, and 4, respectively.

### 2) Sphericity

The sphericity of the negative electrode active material was measured using Morphologi M4 by Malvern Panalytical Ltd. Specifically, after preparing a sample of the negative electrode active material and measuring sphericity of particles in the sample using the above instrument, an average value thereof was taken as the sphericity of the negative electrode active material.

### 3) Average Particle Diameter (D₅₀)

After obtaining a particle size distribution curve of particles using a laser diffraction method, a particle diameter at a cumulative volume of 50% was obtained, and the particle diameter was defined as the average particle diameter (D₅₀) of the negative electrode active material.

### 4) BET Specific Surface Area

The BET specific surface area of the negative electrode active material was measured using a BEL Sorption instrument (BEL Japan, Inc.).

### (2) Preparation of Negative Electrode Slurry

### Example A

The negative electrode active material of Example 1, a styrene-butadiene rubber (SBR) as a binder, carbon black as a conductive agent, and carboxymethyl cellulose (CMC), as a thickener, were added in a weight ratio of 96:1:1:2 to water, as a solvent, to obtain a negative electrode slurry.

A solid content of the negative electrode slurry was adjusted to 48 wt% based on a total weight of the negative electrode slurry.

Viscosity at 25°C of the negative electrode slurry was 7,500 cP.

### Example B

The negative electrode active material of Example 2, a styrene-butadiene rubber (SBR) as a binder, carbon black as a conductive agent, and carboxymethyl cellulose (CMC), as a thickener, were added in a weight ratio of 96:1:1:2 to water, as a solvent, to obtain a negative electrode slurry.

A solid content of the negative electrode slurry was adjusted to 53 wt% based on a total weight of the negative electrode slurry.

Viscosity at 25°C of the negative electrode slurry was 6,000 cP.

### Example C

The negative electrode active material of Example 2, a styrene-butadiene rubber (SBR) as a binder, carbon black as a conductive agent, and carboxymethyl cellulose (CMC), as a thickener, were added in a weight ratio of 96:1:1:2 to water, as a solvent, to obtain a negative electrode slurry.

A solid content of the negative electrode slurry was adjusted to 48 wt% based on a total weight of the negative electrode slurry.

Viscosity at 25°C of the negative electrode slurry was 5,000 cP.

### Comparative Example A

The negative electrode active material of Comparative Example 1, a styrene-butadiene rubber (SBR) as a binder, carbon black as a conductive agent, and carboxymethyl cellulose (CMC), as a thickener, were added in a weight ratio of 96:1:1:2 to water, as a solvent, to obtain a negative electrode slurry.

A solid content of the negative electrode slurry was adjusted to 46 wt% based on a total weight of the negative electrode slurry.

Viscosity at 25°C of the negative electrode slurry was 8,000 cP.

### Comparative Example B

The negative electrode active material of Comparative Example 1, a styrene-butadiene rubber (SBR) as a binder, carbon black as a conductive agent, and carboxymethyl cellulose (CMC), as a thickener, were added in a weight ratio of 96:1:1:2 to water, as a solvent, to obtain a negative electrode slurry.

A solid content of the negative electrode slurry was adjusted to 48 wt% based on a total weight of the negative electrode slurry.

Viscosity at 25°C of the negative electrode slurry was 9,500 cP.

### Comparative Example C

The negative electrode active material of Comparative Example 2, a styrene-butadiene rubber (SBR) as a binder, carbon black as a conductive agent, and carboxymethyl cellulose (CMC), as a thickener, were added in a weight ratio of 96:1:1:2 to water, as a solvent, to obtain a negative electrode slurry.

A solid content of the negative electrode slurry was adjusted to 48 wt% based on a total weight of the negative electrode slurry.

Viscosity at 25°C of the negative electrode slurry was 8,000 cP.

### Experimental Examples

### Experimental Example 1: Filter Test

A filter test was performed by passing the negative electrode slurries respectively prepared in Example A, Example B, Example C, Comparative Example A, Comparative Example B, and Comparative Example C through a 125 mesh filter. If the filter was clogged by the negative electrode slurry, it was marked with "×", and, if a filter clogging phenomenon was not found, it was marked with "○". The results thereof are presented in Table 2 below.

### Experimental Example 2: Measurement of Shear Thickening Slope Value

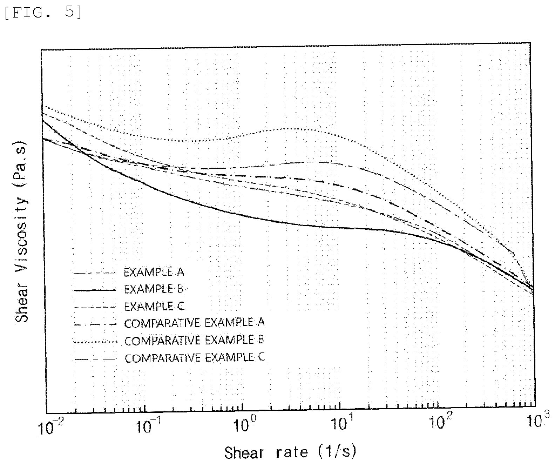

Shear viscosities according to shear rate of the negative electrode slurries respectively prepared in Example A, Example B, Example C, Comparative Example A, Comparative Example B, and Comparative Example C were measured using a Hakke rheometer (manufactured by Thermo Scientific Inc.). Changes in shear viscosities (unit: Pa · s) according to shear rate (unit: 1/s) are illustrated in FIG. 5.

A viscosity value of a section showing shear thickening in the measured shear viscosity was transformed into a log value to determine whether a slope value (linear fitting value) was positive (+) or negative (-), and the results thereof are presented in Table 2.

**[Table 2]**

| | Filter test | Shear thickening slope |
|---|---|---|
| Example A | ○ | Negative (-) |
| Example B | ○ | Negative (-) |
| Example C | ○ | Negative (-) |
| Comparative Example A | × | Positive (+) |
| Comparative Example B | × | Positive (+) |
| Comparative Example C | × | Positive (+) |

Referring to Table 2, with respect to the negative electrode slurries of Example A, Example B, and Example C including the negative electrode active materials according to the present invention, it may be confirmed that phase stabilities were excellent and dispersibilities of the negative electrode active materials were significantly improved in comparison to the negative electrode slurries of Comparative Example A, Comparative Example B, and Comparative Example C.

## Claims

1. A negative electrode active material comprising artificial graphite particles,
wherein, during torque rheometer measurement of a sample consisting of the negative electrode active material and water, a solid content value when the sample has a maximum torque value is 69.5 wt% or more, and
wherein the solid content value when the sample has the maximum torque value is measured by a method including steps (a) to (c):
(a) adding the negative electrode active material into a sample container of a torque rheometer;
(b) measuring a torque value according to a solid content value of the sample by operating the torque rheometer while injecting water into the sample container of the torque rheometer at a constant rate; and
(c) deriving a solid content value when the sample has a maximum torque value in the step (b).

2. The negative electrode active material of claim 1, wherein the negative electrode active material has a sphericity ranging from 0.75 to 1.

3. The negative electrode active material of claim 1, wherein compression density measured by powder flow test of the negative electrode active material is in a range of 850 kg/m³ to 1,200 kg/m³.

4. The negative electrode active material of claim 1, wherein the artificial graphite particles have a secondary particle structure wherein two or more primary particles are assembled.

5. The negative electrode active material of claim 1, wherein the negative electrode active material has an average particle diameter (D₅₀) of 14 um to 20 µm.

6. The negative electrode active material of claim 1, wherein the negative electrode active material has a Brunauer-Emmett-Teller (BET) specific surface area of 0.1 m²/g to 2.0 m²/g.

7. The negative electrode active material of claim 1, further comprising an amorphous carbon coating layer disposed on a surface of the artificial graphite particles.

8. The negative electrode active material of claim 7, wherein the amorphous carbon coating layer is included in an amount ranging from 0.01 wt% to 10 wt% in the negative electrode active material.

9. A negative electrode slurry comprising:
the negative electrode active material of claim 1;
a negative electrode binder;
a negative electrode conductive agent; and
a solvent.

10. The negative electrode slurry of claim 9, wherein a solid content of the negative electrode slurry is 46 wt% or more based on a total weight of the negative electrode slurry.

11. The negative electrode slurry of claim 9, wherein, when a solid content of the negative electrode slurry is 46 wt% or more, a shear thickening slope obtained during measurement of shear viscosity according to shear rate is a negative value.

12. A negative electrode comprising:
a negative electrode current collector; and
a negative electrode active material layer disposed on at least one surface of the negative electrode current collector,
wherein the negative electrode active material layer comprises the negative electrode active material of claim 1.

13. A secondary battery comprising:
the negative electrode of claim 12;
a positive electrode facing the negative electrode;
a separator disposed between the negative electrode and the positive electrode; and
an electrolyte.
